# EUROPÄISCHE PATENTSCHRIFT

(11) **EP 4 019 226 B1**
(45) Veröffentlichungstag und Bekanntmachung des Hinweises auf die Patenterteilung: **30.07.2025**
(21) Anmeldenummer: 21214633.6
(22) Anmeldetag: 15.12.2021
(51) Int. Cl.: B29C 51/26, B29C 51/42, B29C 59/02, B29C 43/02, B29C 43/52, B29C 35/16, B29C 51/00, B29C 65/00, B29C 65/48, B29L 31/00, F25D 23/06

(54) **THERMOFORMTEIL**
THERMOFORMED PART
PIÈCE THERMOFORMÉE

(30) Priorität: 22.12.2020 DE 102020134732
(43) Veröffentlichungstag der Anmeldung: 29.06.2022
(73) Patentinhaber: Liebherr-Hausgeräte Ochsenhausen GmbH, 88416 Ochsenhausen (DE)
(72) Erfinder: Vögele, Rupert, 88416 Wennedach (DE); Koch, Andreas, 88471 Laupheim (DE)
(74) Vertreter: Herrmann, Uwe

(56) Entgegenhaltungen:
- EP-A1- 0 937 180
- EP-A2- 2 345 860
- EP-B1- 2 829 828
- WO-A1-2013/174741

## Beschreibung

Die Erfindung betrifft ein Thermoformteil, insbesondere einen Innenbehälter für ein Kühl- und/oder Gefriergerät.

Im Rahmen der Herstellung von Kühl- und/oder Gefriergeräten ist es bekannt, die Geräteinnenbehälter durch Thermoformen eines Halbzeugs, die aus einem thermoplastischen Kunststoff bestehen können, herzustellen. Dabei wird eine sogenannte Kunststoffplatine zunächst in einer Aufwärmstation auf eine Temperatur erwärmt, bei welcher sich der Kunststoff plastisch verformen lässt. Die so erwärmte Platine wird an eine Werkzeugstation weitergegeben und dort unter Anlegen einer Druckdifferenz mittels Einpressen eines Werkzeugs, beispielsweise eine Matrize oder eine Stempels, geformt. EP 2 829 828 B1 zeigt beispielhaft einen thermogeformten Innenbehälter für ein Kühl- und/oder Gefriergerät gemäß dem Oberbegriff des Anspruchs 1.

In der weiteren Verarbeitung ist es möglich, dass unterschiedliche Bauteile an das so erzeugte Thermoformteil angebracht werden und ein Kleber oder auch ein Schaum beim Verschäumen mit dem Thermoformteil in Kontakt kommt. Um beispielsweise das Ankleben von Bauteilen an dem Thermoformteil durchzuführen, ist auf einen auf die Zusammensetzung des Thermoformteils abgestimmten Kleber zu achten, der eine über die Produktlebensdauer stabile Verbindung gewährleistet. Darüber hinaus stellen Thermoformteile auch wesentliche strukturelle Elemente (bspw. bei einer Nutzung in Kühl- und/oder Gefriergeräten) dar, sodass diese eine möglichst hohe mechanische und/oder chemische Stabilität aufweisen sollen.

Es ist jedoch auch das gleichzeitige Bestreben des Fachmanns, die Ressourcen beim Erstellen eines solchen Thermoformteils und auch bei den mit den Thermoformteil in Zusammenhang stehenden nachgelagerten Arbeitsschritten zu minimieren, um Kosten zu senken.

Dies gelingt mit einem Thermoformteil, das sämtliche Merkmale eines der unabhängigen Ansprüche aufweist. Weitere vorteilhafte Ausgestaltungen des Thermoformteils finden sich dabei in den abhängigen Ansprüchen.

Das erfindungsgemäße Thermoformteil, das einen Innenbehälter für ein Kühl- und/oder Gefriergerät darstellt, umfasst dabei ein aus einem Halbzeug durch Thermoformen gebildetes Formteil, das dadurch gekennzeichnet, dass das Formteil in einem Oberflächenbereich eine geometrisch unbestimmte Form aufweist, wobei der Oberflächenbereich eine nicht-glatte, nichtrillige und ungerichtete Gestalt besitzt, wobei der Oberflachenbereich eine Ansammlung van unregelmäßig verteilten Erhebungen und Vertiefungen aufweist, die vorzugsweise mit einer Oberflächenstruktur, die einer Raufasertapete oder einer Orangenhaut nachempfunden ist, und wobei die Erhebungen unterschiedlich groß und/oder unterschiedlich hoch ausgeprägt sind.

Dabei kann auch vorgesehen sein, dass die Rauheit des Oberflächenbereichs sich von derjenigen unterscheidet, die in einem angrenzenden zu dem Oberflächenbereich vorgesehenen Bereich vorliegt.

Durch die spezifische Ausgestaltung des Oberflächenbereichs des Thermoformteils vergrößert sich dessen Oberfläche, sodass eine bessere Haftung von Klebern oder einer Verschäumung erreichbar ist. Die dabei vergrößerte Oberfläche bietet mehr Platz zum Ansetzen einer Klebeverbindung, sodass zum Erreichen einer erforderlichen Klebekraft eine geringere Klebefläche oder ein nicht so stark haftendes Klebemittel Verwendung finden kann.

Vorteilhaft an der vorliegenden Erfindung ist, dass keine weiteren Füllstoffe oder Füllmaterialien erforderlich sind und eine Oberflächenänderung bzw. eine Materialaufdickung durch denselben Werkstoff, aus dem auch das Thermoformteil ist, möglich ist.

Durch das Vorsehen von unregelmäßig verteilten Erhebungen und Vertiefungen wird der gewünschte Effekt erreicht, dass die dabei zur Verfügung stehende Oberfläche, die beispielsweise mit einem später aufgetragenen Klebstoff in Verbindung kommt, vergrößert wird. Die Struktur des Oberflächenbereichs und/oder dessen optische Erscheinung lässt sich am besten mit einer Raufasertapete bzw. der Haut eine Orange beschreiben, da hierbei ebenfalls unregelmäßig verteilte Erhebungen und/oder Vertiefungen vorgesehen sind, die diesen Oberflächen ihre charakteristische Prägung verleihen.

Insbesondere bei nachfolgenden Arbeitsschritten, bspw. einem Einbringen von Schaum in einen Zwischenwandbereich eines Kühl- und/oder Gefriergeräts, bei dem der Innenbehälter durch das Thermoformteil gebildet ist, ist es von großem Vorteil, wenn der dabei eingebrachte Schaum die verschiedenen Bestandteile fest miteinander verklebt. So ist es dann möglich, auf andere Befestigungsmittel zu verzichten oder eine Stabilität des Kühl- und/oder Gefriergeräts zu erreichen, die vorher nicht erreichbar war.

Dabei ist vorgesehen, dass die Erhebungen unterschiedlich groß und/oder unterschiedlich hoch ausgeprägt sind. Wie bei einem ungerichteten Erscheinungsbild üblich, ist die Struktur des Oberflächenbereichs in gewissem Maße zufällig oder besitzt zumindest die Erscheinung eines zufälligen, sich nicht wiederholenden Musters.

Demnach kann es nach der Erfindung auch vorgesehen sein, dass die Vertiefungen unterschiedlich groß und/oder unterschiedlich tief ausgeprägt sein können. Es gilt also hier für die Vertiefungen des Oberflächenbereichs dasselbe wie für die Erhebungen des Oberflächenbereichs, sodass auch hier eine Regelmäßigkeit nicht vorhanden sein muss.

Ein Thermoformteil, insbesondere einen Innenbehälter für ein Kühl- und/oder Gefriergerät, könnte aus einem Halbzeug durch Thermoformen gebildetes Formteil aufweist. Das Formteil könnte in einem Oberflächenbereich eine geometrisch bestimmte Form aufweisen, wobei der Oberflächenbereich gegenüber hierzu angrenzenden Bereichen des Formteils erhaben ist, sich aber in der Oberflächenstruktur und -beschaffenheit hiervon nicht unterscheidet.

Durch die veränderte Geometrie, hervorgerufen durch die Erhebung in dem Oberflächenbereich ergibt sich eine verbesserte mechanische und/oder chemische Stabilität des Thermoformteils.

Dabei kann auch vorgesehen sein, dass die Rauheit des Oberflächenbereichs sich von derjenigen unterscheidet, die in angrenzenden Bereichen zu dem Oberflächenbereich vorliegen.

Nach einer optionalen Modifikation könnte die Dicke des Formteils in dem Oberflächenbereich gegenüber hierzu angrenzenden Bereichen größer ist.

Weiter kann hierbei vorgesehen sein, dass der Oberflächenbereich die Ausgestaltung einer erhabenen Wabenstruktur besitzt.

Die Erfindung betrifft ferner ein Verfahren zum Herstellen eines Thermoformteils nach einer der vorstehend diskutierten Varianten, wobei das Verfahren die nachfolgenden Schritte umfasst:
- Erwärmen eines Kunststoff-Halbzeugs auf eine Temperatur, die ein plastisches Umformen zulässt, und
- Pressen des Kunststoff-Halbzeugs durch Aufbringen einer Druckkraft, vorzugsweise durch Einpressen eines Stempels oder einer Matrize.

Dabei wird das typischerweise aus Kunststoff bestehende Halbzeug erwärmt und, wenn es eine Temperatur erreicht hat, die ein plastisches Umformen erlaubt, durch einen Stempel oder eine Matrize geformt. Dabei wird der Stempel bzw. die Matrize mit hohem Druck auf das erwärmte Halbzeug aufgepresst, sodass das Halbzeug in die gewünschte Form gebracht wird. In der Regel ist dabei auch eine Stempel-Gegenfläche vorgesehen, in welche die andere, nicht mit dem Stempel bzw. der Matrize zusammenwirkende flächige Seite des Halbzeugs eingepresst wird, so dass das Halbzeug eine gewünschte vorgegebene Form erreicht.

Um nun die spezifische Form eines Oberflächenbereichs des so gebildeten Formteils zu erreichen, gibt es verschiedene Ansätze.

Zum einen kann nach der Erfindung vorgesehen sein, dass beim Herstellen des Thermoformteils ferner ein Temperaturgradient in dem Kunststoff-Halbzeug vor oder während einem Formen des Kunststoff-Halbzeugs erzeugt wird, wobei die räumliche Anordnung des Temperaturgradienten auf den Pressvorgang des Stempels abgestimmt und/oder durch den Pressvorgang eingebracht wird, vorzugsweise durch Einpressen eines Stempels der an seiner Pressfläche einen über seine flächige Seite verlaufenden Temperaturgradienten aufweist. Demnach kann also vorgesehen sein, dass unterschiedliche Bereiche des Stempels unterschiedliche Temperaturen aufweisen.

Die Variation der Temperatur über die Fläche des zu formenden oder in der Formung befindlichen Halbzeugs ermöglicht, dass die unterschiedlich temperierten Bereiche des Halbzeugs auf identischen Druck unterschiedlich reagieren. Ist es beispielsweise gewünscht eine Verdickung im Durchmesser des Formteils hervorzurufen, kann eine entsprechende Fläche des Halbzeug stärker erwärmt werden, sodass beim Pressvorgang diese Teils des Halbzeug leichter in den dickeren Teil gedrängt werden können.

Weiter kann nach der Erfindung vorgesehen sein, dass das Vorsehen des Temperaturgradienten durch Aufbringen eines Fluids, bspw. eines Kühlfluids auf das noch nicht verformte Kunststoff-Halbzeug, vorzugsweise durch Benetzen von dessen Oberfläche erfolgt, wobei das Kühlfluid auf einem Bereich des Kunststoff-Halbzeugs aufgebracht wird, der nach einem Formen dem Oberflächenbereich des Formteils entspricht, der die geometrisch unbestimmte Form besitzt.

Dabei kann vorgesehen sein, dass das Fluid auf das bereits erwärmte Halbzeug aufgebracht wird, wohingegen es jedoch auch möglich ist, dass das Fluid auf das noch nicht erwärmte Halbzeug aufgebracht wird und die Erwärmung durch einen entsprechend heißen Stempel oder eine entsprechend heiße Matrize in das Halbzeug eingebracht wird. Vorteilhafterweise wird dabei auch das Fluid erwärmt, wobei dies dann, beispielsweise durch ein Verdampfen des Fluids oder dergleichen zu der gewünschten Gestaltung des Oberflächenbereichs mit seiner geometrisch unbestimmten Form beiträgt.

Weiter kann vorgesehen sein, dass ein beim Pressvorgang genutzter Stempel oder eine Stempel-Gegenfläche eine nicht-glatte, nichtrillige und ungerichtete Gestalt aufweist. Diese Form des Stempels bzw. der Matrize und/oder der entsprechenden Gegenform kann ebenfalls dazu beitragen, dass die gewünschte geometrisch unbestimmte Form erreicht wird.

Ferner kann bei dem Verfahren vorgesehen sein, dass die Temperatur in dem Bereich des Halbzeugs, das nach der Umformung dem Oberflächenbereich mit der geometrisch unbestimmten Oberfläche entspricht, oberhalb des Schmelzpunkts des Halbzeugs liegt und vor oder während den Pressvorgang erreicht wird, wobei vorzugsweise bei einem Abheben eines den Pressvorgang durchführenden Stempels die geometrisch unbestimmte Form des Oberflächenbereichs entsteht.

Die Temperatur kann dabei in bestimmten Bereichen des Halbzeugs so hoch werden, dass sich das Halbzeug dort verflüssigt, wobei es dann vorzugsweise bei einem Abheben des Stempels oder der Matrize zu der unbestimmten Form in dem Oberflächenbereich kommt.

Nach der Erfindung kann ferner vorgesehen sein, dass nach einem Pressvorgang ein weiterer Formungsschritt ausgeführt wird, um den Oberflächenbereich mit der geometrisch bestimmten Form zu bilden, vorzugsweise durch ein Werkzeug, das zusätzlich zu dem den Pressvorgang durchführenden Werkzeug vorgesehen ist.

Demnach ist also auch nach einem Pressvorgang das weitere Bearbeiten des bereits verformten Thermoformteils durch ein weiteres Werkzeug möglich, um die geometrisch bestimmte Form zu erlangen.

Die Erfindung betrifft ferner ein Kühl- und/oder Gefriergerät mit einem Thermoformteil als Innenbehälter nach einer der vorstehend diskutierten Varianten.

Die Erfindung betrifft ferner Kühl- und/oder Gefriergerät mit einem Thermoformteil als Innenbehälter, dass nach einem der Verfahren einer der vorstehenden Varianten hergestellt worden ist.

Weitere Vorteile, Merkmale und Einzelheiten der Erfindung werden anhand der Figurenbeschreibung ersichtlich. Dabei zeigen:
- Fig. 1:: eine schematische Darstellung zur Herstellung eines erfindungsgemäßen Thermoformteils mit einem Oberflächenbereich, der eine geometrisch unbestimmte Form aufweist, und
- Fig. 2:: eine schematische Darstellung zur Herstellung eines erfindungsgemäßen Thermoformteils mit einem Oberflächenbereich, der eine geometrisch bestimmte Form aufweist.

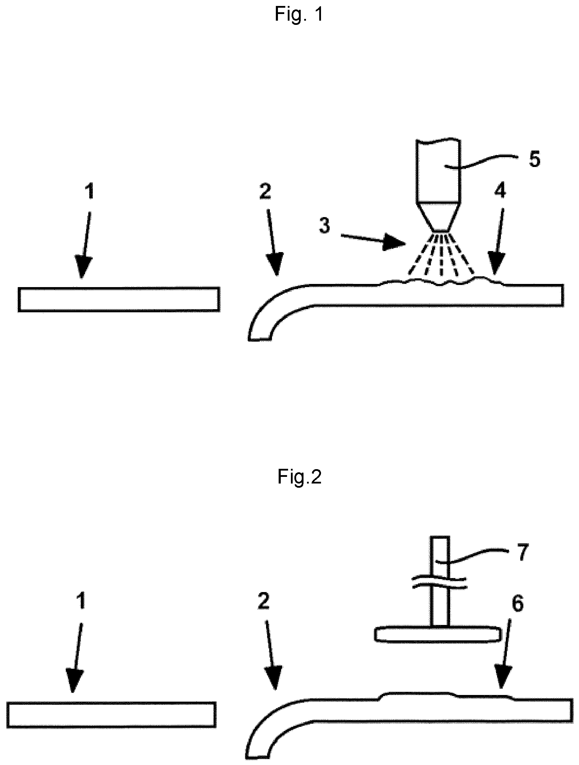

Fig. 1 zeigt eine schematische Darstellung zur Herstellung eines Thermoformteils. Ausgehend von einem Halbzeug 1, das in der Regel aus Kunststoff besteht und in der Form einer Platine oder einer Platte vorliegt, wird das finale Thermoformteil 2 gewonnen.

Hierzu ist es von Vorteil, dass das Halbzeug 1 vor einem Pressvorgang oder bei dem Pressvorgang erwärmt wird, sodass sich das aus Kunststoff bestehende Halbzeug 1 plastisch verformen lässt. Dies kann auf verschiedene Arten erreicht werden, beispielsweise durch Einbringen des Halbzeugs 1 in einen Ofen oder einem Aussetzen einer Infrarotstrahlung. Weiter ist es darüber hinaus möglich, dass der zum Umformen bzw. zum Ausführen des Pressvorgangs genutzte Stempel oder die hierfür herangezogene Matrize selbst die zur Umformung erforderliche Temperaturerhöhung des Halbzeug 1 bewirkt. Dabei wird der Stempel oder die Matrize so stark erhitzt, dass bei einem Kontaktieren mit dem Halbzeug 1 dieses vollständig auf die erforderliche Temperatur gebracht wird, sodass ein anschließendes Ausüben von Druck die gewünschte Umformung erzeugt.

Das dargestellte Düsenventilsystem 5 ist dazu ausgelegt, ein Fluid 3, beispielsweise Wasser oder dergleichen, auf das Halbzeug 1 aufzubringen. Wird nun durch Aufsetzen des Stempels und Ausüben der Druckkraft die Umformung vorgenommen, kann dadurch die gewünschte geometrisch unbestimmte Form 4 des Oberflächenbereichs erzeugt werden.

Fig. 2 zeigt eine schematische Darstellung zur Herstellung eines Thermoformteils, bei der ein Oberflächenbereich eine geometrisch bestimmte Form 6 aufweist. Dabei kann die geometrisch bestimmte Form 6 durch einen (temperierten) Stempel bzw. Matrize oder aber mit einem Zusatzwerkzeug 7 erreicht werden, das erst nach einem ersten Umformen des Halbzeug 1 zum Einsatz kommt. Beispielsweise lässt sich die dadurch erreichte geometrisch bestimmte Form durch eine Wabenstruktur oder andere erhabene partielle Bereiche beschreiben.

## Patentansprüche

1. Thermoformteil (2), wobei das Thermoformteil (2) ein Innenbehälter für ein Kühl- und/oder Gefriergerät ist, umfassend:
ein aus einem Halbzeug (1) durch Thermoformen gebildetes Formteil (2),
**dadurch gekennzeichnet, dass**
das Formteil (2) in einem Oberflächenbereich (4) eine geometrisch unbestimmte Form aufweist, wobei
der Oberflächenbereich (4) eine nicht-glatte, nichtrillige und ungerichtete Gestalt besitzt, wobei der Oberflächenbereich (4) eine Ansammlung von unregelmäßig verteilten Erhebungen und Vertiefungen aufweist, vorzugsweise mit einer Oberflächenstruktur, die einer Raufasertapete oder einer Orangenhaut nachempfunden ist, wobei die Erhebungen unterschiedlich groß und/oder unterschiedlich hoch ausgeprägt sind.

2. Thermoformteil (2) nach Anspruch 1, wobei die Vertiefungen unterschiedlich groß ausgeprägt sein können und/oder unterschiedlich tief ausgeprägt sein können.

3. Verfahren zum Herstellen eines Thermoformteils (2) nach einem der vorhergehenden Ansprüche, wobei das Verfahren die nachfolgenden Schritte umfasst:
Erwärmen eines Kunststoff-Halbzeugs (1) auf eine Temperatur, die ein plastisches Umformen zulässt, und
Pressen des Kunststoff-Halbzeugs (1) durch Aufbringen einer Druckkraft, vorzugsweise durch Einpressen eines Stempels.

4. Verfahren nach dem vorhergehenden Anspruch 3, ferner umfassend die Schritte:
Erzeugen eines Temperaturgradienten in dem Kunststoff-Halbzeug (1) vor oder während einem Formen des Kunststoff-Halbzeugs (1),
wobei die räumliche Anordnung des Temperaturgradienten auf den Pressvorgang abgestimmt und/oder durch den Pressvorgang eingebracht wird, vorzugsweise durch Einpressen eines Stempels der an seiner Pressfläche einen Temperaturgradienten aufweist.

5. Verfahren nach einem der vorhergehenden Ansprüche 3 oder 4, ferner umfassend die Schritte:
Aufbringen eines Fluids (3), bspw. Kühlfluids, auf das noch nicht verformte Kunststoff-Halbzeug (1), vorzugsweise durch Benetzen von dessen Oberfläche, wobei
das Kühlfluid (3) auf einem Bereich des Kunststoff-Halbzeugs (1) aufgebracht wird, der nach einem Formen dem Oberflächenbereich des Formteils (2) entspricht, der die geometrisch unbestimmte Form besitzt.

6. Verfahren nach einem der vorhergehenden Ansprüche 3 bis 5 zum Herstellen eines Thermoformteils (2) nach den Ansprüchen 1 bis 2, wobei
ein beim Pressvorgang genutzter Stempel oder eine Stempel-Gegenfläche eine nicht-glatte, nichtrillige und ungerichtete Gestalt aufweist.

7. Verfahren nach einem der vorhergehenden Ansprüche 3 bis 6 zum Herstellen eines Thermoformteils (2) nach den Ansprüchen 1 bis 2, wobei die Temperatur in dem Bereich des Halbzeug, das nach der Umformung dem Oberflächenbereichs mit der geometrisch unbestimmten Fläche entspricht, oberhalb des Schmelzpunkts des Halbzeugs liegt und vor oder während den Pressvorgang erreicht wird, wobei vorzugsweise bei einem Abheben eines den Pressvorgang durchführenden Stempels die geometrisch unbestimmte Form des Oberflächenbereichs entsteht.

8. Verfahren nach einem der vorhergehenden Ansprüche 3 bis 6 zum Herstellen eines Thermoformteils (2) nach den Ansprüchen 3 bis 4, wobei
nach einem Pressvorgang ein weiterer Formungsschritt ausgeführt wird, um den Oberflächenbereich mit der geometrisch bestimmten Form zu bilden, vorzugsweise durch ein Werkzeug (7), das zusätzlich zu dem den Pressvorgang durchführenden Werkzeug vorgesehen ist.

9. Kühl- und/oder Gefriergerät mit einem Thermoformteil als Innenbehälter nach einem der vorhergehenden Ansprüche 1 oder 2.

10. Kühl- und/oder Gefriergerät mit einem Thermoformteil als Innenbehälter, dass nach einem der Verfahren nach den Ansprüchen 3-8 hergestellt worden ist.

## Claims

1. Thermoformed part (2), wherein the thermoformed part (2) is an inner container for a refrigerator and/or freezer, comprising:
a formed part (2) formed from a semi-finished product (1) by means of thermoforming,
**characterised in that**
the formed part (2) has a geometrically indeterminate shape in a surface region (4), wherein
the surface region (4) has a non-smooth, non-grooved and non-directional shape, wherein the surface region (4) has an accumulation of irregularly distributed elevations and depressions, preferably with a surface structure which is modelled on woodchip wallpaper or an orange peel effect, wherein the elevations are of different sizes and/or different heights.

2. Thermoformed part (2) according to claim 1, wherein the depressions can be of different sizes and/or different depths.

3. Method for manufacturing a thermoformed part (2) according to any one of the preceding claims, wherein the method comprises the following steps:
heating a plastic semi-finished product (1) to a temperature that allows plastic forming, and
pressing the plastic semi-finished product (1) by applying a compressive force, preferably by pressing in a punch.

4. Method according to the preceding claim 3, further comprising the steps of:
creating a temperature gradient in the plastic semi-finished product (1) before or during forming the plastic semi-finished product (1),
wherein the spatial arrangement of the temperature gradient is adapted to the pressing process and/or is introduced by the pressing process, preferably by pressing in a punch that has a temperature gradient on its pressing surface.

5. Method according to either one of the preceding claims 3 or 4, further comprising the steps of:
applying a fluid (3), for example coolant fluid, to the not yet formed plastic semi-finished product (1), preferably by wetting its surface, wherein
the coolant fluid (3) is applied to an area of the plastic semi-finished product (1) that, after forming, corresponds to the surface region of the formed part (2), which has the geometrically indeterminate shape.

6. Method according to any one of the preceding claims 3 to 5 for manufacturing a thermoformed part (2) according to claims 1 to 2, wherein
a punch used in the pressing process or a punch mating surface has a non-smooth, non-grooved and non-directional shape.

7. Method according to any one of the preceding claims 3 to 6 for manufacturing a thermoformed part (2) according to claims 1 to 2, wherein the temperature in the region of the semi-finished product, which corresponds to the surface region with the geometrically undefined surface after forming, is above the melting point of the semi-finished product and is reached before or during the pressing process, wherein the geometrically indeterminate shape of the surface region is preferably created when a punch carrying out the pressing process is lifted.

8. Method according to any one of the preceding claims 3 to 6 for manufacturing a thermoformed part (2) according to claims 3 to 4, wherein
a further forming step is carried out after a pressing process in order to form the surface region with the geometrically determined shape, preferably by a tool (7) that is provided in addition to the tool carrying out the pressing process.

9. Refrigerator and/or freezer having a thermoformed part as an inner container according to any one of the preceding claims 1 or 2.

10. Refrigerator and/or freezer having a thermoformed part as an inner container, which has been manufactured according to one of the methods according to claims 3 to 8.

## Revendications

1. Pièce thermoformée (2), la pièce thermoformée (2) étant un récipient intérieur pour un appareil de réfrigération et/ou de congélation, comprenant :
une pièce moulée (2) formée par thermoformage à partir d'un produit semi-fini (1),
**caractérisée en ce que**
la pièce moulée (2) présente une forme géométriquement indéterminée dans une zone de surface (4),
la zone de surface (4) possédant une forme non lisse, non rainurée et non orientée, la zone de surface (4) présentant une accumulation de bosses et de creux répartis de manière irrégulière, de préférence avec une structure de surface imitant un papier peint à fibres rugueuses ou une peau d'orange, les bosses étant de taille différente et/ou de hauteur différente.

2. Pièce thermoformée (2) selon la revendication 1, dans laquelle les creux peuvent être imprimés avec des tailles différentes et/ou peuvent être imprimés avec des profondeurs différentes.

3. Procédé de fabrication d'une pièce thermoformée (2) selon l'une quelconque des revendications précédentes, le procédé comprenant les étapes suivantes :
le chauffage d'un produit semi-fini en matière plastique (1) à une température permettant une mise en forme plastique, et
le pressage du produit semi-fini en matière plastique (1) par application d'une force de compression, de préférence par enfoncement d'un poinçon.

4. Procédé selon la revendication 3 précédente, comprenant en outre les étapes suivantes :
la génération d'un gradient de température dans le produit semi-fini en matière plastique (1) avant ou pendant un formage du produit semi-fini en matière plastique (1),
l'agencement spatial du gradient de température étant accordé à l'opération de pressage et/ou étant introduit par l'opération de pressage, de préférence par enfoncement d'un poinçon qui présente un gradient de température sur sa surface de pressage.

5. Procédé selon l'une quelconque des revendications 3 ou 4 précédentes, comprenant en outre les étapes suivantes :
l'application d'un fluide (3), par exemple d'un fluide de refroidissement, sur le produit semi-fini en matière plastique (1) non encore déformé, de préférence par mouillage de sa surface,
le fluide de refroidissement (3) étant appliqué sur une zone du produit semi-fini en matière plastique (1) qui correspond, après un formage, à la zone de surface de la pièce moulée (2) qui possède la forme géométriquement indéterminée.

6. Procédé selon l'une quelconque des revendications 3 à 5 précédentes pour la fabrication d'une pièce thermoformée (2) selon les revendications 1 à 2, dans lequel
un poinçon ou une contre-surface de poinçon utilisé lors de l'opération de pressage présente une forme non lisse, non rainurée et non orientée.

7. Procédé selon l'une quelconque des revendications 3 à 6 précédentes pour la fabrication d'une pièce thermoformée (2) selon les revendications 1 à 2, dans lequel la température dans la zone du produit semi-fini qui correspond après la mise en forme à la zone de surface avec la surface géométriquement indéterminée est supérieure au point de fusion du produit semi-fini et est atteinte avant ou pendant l'opération de pressage, la forme géométriquement indéterminée de la zone de surface étant de préférence obtenue lors d'un soulèvement d'un poinçon effectuant l'opération de pressage.

8. Procédé selon l'une quelconque des revendications 3 à 6 précédentes pour la fabrication d'une pièce thermoformée (2) selon les revendications 3 à 4, dans lequel
après une opération de pressage, une autre étape de formage est exécutée afin de former la zone de surface avec la forme géométriquement déterminée, de préférence par un outil (7) qui est prévu en plus de l'outil effectuant l'opération de pressage.

9. Appareil de réfrigération et/ou de congélation avec une pièce thermoformée en tant que récipient intérieur selon l'une quelconque des revendications 1 ou 2 précédentes.

10. Appareil de réfrigération et/ou de congélation avec une pièce thermoformée en tant que récipient intérieur, qui a été fabriquée par l'un des procédés selon les revendications 3 à 8.
